# EUROPEAN PATENT SPECIFICATION

(11) **EP 4 361 010 B1**
(45) Date of publication and mention of the grant of the patent: **19.02.2025**
(21) Application number: 23199794.1
(22) Date of filing: 26.09.2023
(51) Int. Cl.: B62J 41/00, B62J 17/10

(54) **STRADDLED VEHICLE**
GRÄTSCHSITZFAHRZEUG
VÉHICULE À SELLE

(30) Priority: 27.10.2022 JP 2022172108
(43) Date of publication of application: 01.05.2024
(73) Proprietor: Yamaha Hatsudoki Kabushiki Kaisha, Iwata-shi, Shizuoka-ken 438-8501 (JP)
(72) Inventor: NITTA, Kei, Iwata-shi, 438-8501 (JP); TAKARA, Koji, Iwata-shi, 438-8501 (JP)
(74) Representative: Studio Torta S.p.A.

(56) References cited:
- IT-A1- 202100 002 009
- US-B2- 11 235 832
- US-B2- 7 448 461
- RAINER FRIEDMANN: "BMW S1000RR präsentation auf der Eicma 2018", 11 November 2018 (2018-11-11), XP093128766, Retrieved from the Internet <URL:https://www.youtube.com/watch?v=BIeftrU4Ino> [retrieved on 20240207]

## Description

### Technical field

The present invention relates to a straddled vehicle having a front cowl.

### Prior Art

A straddled vehicle having a front cowl to reduce aerodynamic drag during driving has been known in the art, as disclosed in Patent Document No. 1, for example. As such a front cowl, a front cowl is known in the art that has a depression recessed rearward in the vehicle front-rear direction. Also known is a straddled vehicle having a heat exchanger (e.g., a radiator or an oil cooler) that is cooled by airflow generated by driving.

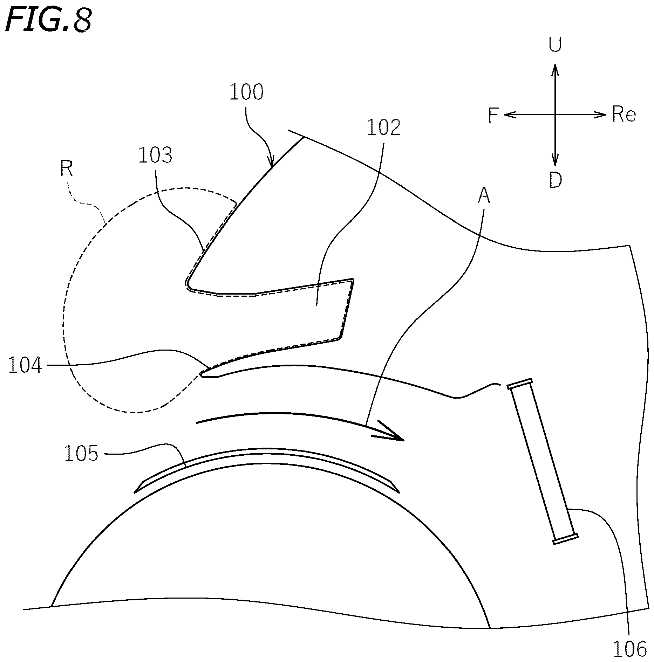

FIG. **8** is a partial end surface view of a conventional straddled vehicle, showing a vertical end surface passing through the vehicle center line. The straddled vehicle includes a front cowl **100** with a depression **102** and a radiator **106.** The front cowl **100** includes a cowl upper portion **103** located upward of the depression **102,** a cowl lower portion **104** located downward of the depression **102,** a cowl left portion (not shown) located leftward of the depression **102,** and a cowl right portion (not shown) located rightward of the depression **102.** The surface of the cowl upper portion **103** extends without steps forward and downward. The surface of the cowl upper portion **103** extends leftward and rightward without steps, although not shown in the figures. Part **A** of the airflow generated by driving (hereinafter referred to simply as "airflow") flows rearward passing between the cowl lower portion **104** and a front fender **105** to cool the radiator **106.**

Patent Document No. 1: JP 2022-104685 A Document IT202100002009A1 shows the preamble of claim 1.

Since the airflow blows onto the front cowl **100** from the front, the area forward of the front cowl **100** is an area of high pressure (hereinafter referred to as "high pressure area"). The sign **R** in FIG. **8** schematically represents the high pressure area. As the straddled vehicle includes the front cowl **100,** it is possible to reduce the aerodynamic drag during driving, but the high pressure area **R** occurs forward of the front cowl **100.** The high pressure area **R** is formed directly in front of the depression **102** of the front cowl **100.**

An airflow has a tendency to flow avoiding high pressure areas. In the example shown in FIG. **8****,** the high pressure area **R** is formed up to a point relatively downward of the cowl lower portion **104** of the front cowl **100.** Since an airflow is relatively less likely to flow downward of the cowl lower portion **104,** an airflow is relatively less likely to flow toward the radiator **106.** However, if the airflow can flow smoothly toward the radiator **106,** it is possible to improve the cooling performance of the radiator **106.**

The present invention has been made in view of these points, and an object thereof is to provide a straddled vehicle capable of improving the cooling performance of the heat exchanger while reducing the aerodynamic drag during driving.

### Description of the invention

A straddled vehicle disclosed herein includes: a front wheel having a center axle; a front cowl that is arranged upward of the front wheel and has a depression recessed rearward; and a heat exchanger arranged rearward relative to the center axle of the front wheel. The front cowl includes a cowl upper portion located upward of the depression, a cowl lower portion located downward of the depression, a cowl left portion located leftward of the depression, and a cowl right portion located rightward of the depression. An air passage is formed downward of the cowl lower portion and upward of the front wheel, wherein an airflow flows rearward through the air passage. The heat exchanger is arranged rearward of the air passage. On a vertical end surface passing through a vehicle center line of the front cowl, the cowl upper portion has a first front end projecting forward, and the cowl lower portion has a second front end located forward relative to the first front end.

With the straddled vehicle described above, since the straddled vehicle includes a front cowl, it is possible to reduce the aerodynamic drag during driving. Since the second front end of the cowl lower portion is arranged forward relative to the first front end of the cowl upper portion, the high pressure area formed forward of the depression in the front cowl is formed at a position relatively upward. Therefore, airflow generated by driving is relatively more likely to flow into the air passage downward of the cowl lower portion. The airflow can flow smoothly toward the heat exchanger. Thus, it is possible to reduce the aerodynamic drag during driving and to improve the cooling performance of the heat exchanger.

The cowl upper portion may include a left portion, a right portion located rightward relative to the left portion, and a central portion that is located rightward of the left portion and leftward of the right portion and that is recessed rearward from the left portion and the right portion. The first front end may be provided in the central portion.

Since the central portion of the cowl upper portion located upward of the depression is recessed rearward as described above, it is possible to promote the formation of the high pressure area forward of the depression at a position relatively upward. Thus, airflow can flow even more smoothly toward the heat exchanger, and it is possible to further improve the cooling performance of the heat exchanger.

An amount of depression at a lower end of the central portion of the cowl upper portion may be larger than an amount of depression of a portion of the central portion upward relative to the lower end. An amount of depression of the central portion of the cowl upper portion may gradually increase downward across the central portion. The left portion of the cowl upper portion may have a right side surface located on a left side of the central portion; and the right portion of the cowl upper portion may have a left side surface located on a right side of the central portion.

Since the cowl upper portion is configured as described above, it is easier to form the high pressure area forward of the depression at a position more upward. Thus, since airflow can flow more smoothly toward the heat exchanger, it is possible to further improve the cooling performance of the heat exchanger.

On a vertical end surface passing through a vehicle center line of the front cowl, the second front end may be located forward of an extension line, which is a downward extension of a contour of the central portion of the cowl upper portion. On a vertical end surface passing through a vehicle center line of the front cowl, a dimension in a front-rear direction between the second front end and the first front end may be equal to or greater than a half of a dimension of the depression in the vertical direction at a position of the first front end. On a vertical end surface passing through a vehicle center line of the front cowl, a dimension in a front-rear direction between the second front end and the first front end may be larger than a maximum value of an amount of depression of the central portion of the cowl upper portion.

With the configuration described above, the second front end of the cowl lower portion is located more forward. Thus, it is possible to facilitate the formation of the higher pressure area forward of the depression at a position more upward. Thus, since airflow can flow more smoothly toward the heat exchanger, it is possible to further improve the cooling performance of the heat exchanger.

The second front end of the cowl lower portion may be located upward relative to an upper end of the heat exchanger.

Thus, airflow can be desirably supplied to the heat exchanger through the air passage formed downward of the cowl lower portion. Thus, it is possible to improve the cooling performance of the heat exchanger.

The first front end and the second front end may be located rearward relative to a front end of the front wheel and forward relative to the center axle of the front wheel.

The depression of the front cowl may have an opening facing rearward. The front cowl may have a duct formed by the depression that directs airflow rearward.

Thus, through the duct, air can be directed from the front side of the front cowl to the rear side of the front cowl. For example, if an air cleaner or an engine is installed rearward of the duct, air can be efficiently supplied to the air cleaner or the engine. Thus, it is possible to improve the power of the engine.

According to the present invention, it is possible to provide a straddled vehicle capable of improving the cooling performance of the heat exchanger while reducing the aerodynamic drag during driving.

### Brief description of the drawings

FIG. **1** is a left side view of a motorcycle according to one embodiment.
FIG. **2** is a vertical end surface view passing through the vehicle center line of the motorcycle.
FIG. **3** is a front view of the motorcycle.
FIG. **4** is a perspective view of a front cowl.
FIG. **5** is an end surface view taken along line V-V of FIG. **1**, showing the front cowl.
FIG. **6** is a vertical end surface view passing through the vehicle center line, showing a part of the motorcycle.
FIG. **7** is a view showing a high pressure area forward of the front cowl.
FIG. **8** is a partial vertical end surface view passing through the vehicle center line, showing a conventional straddled vehicle.

### Embodiments of the invention

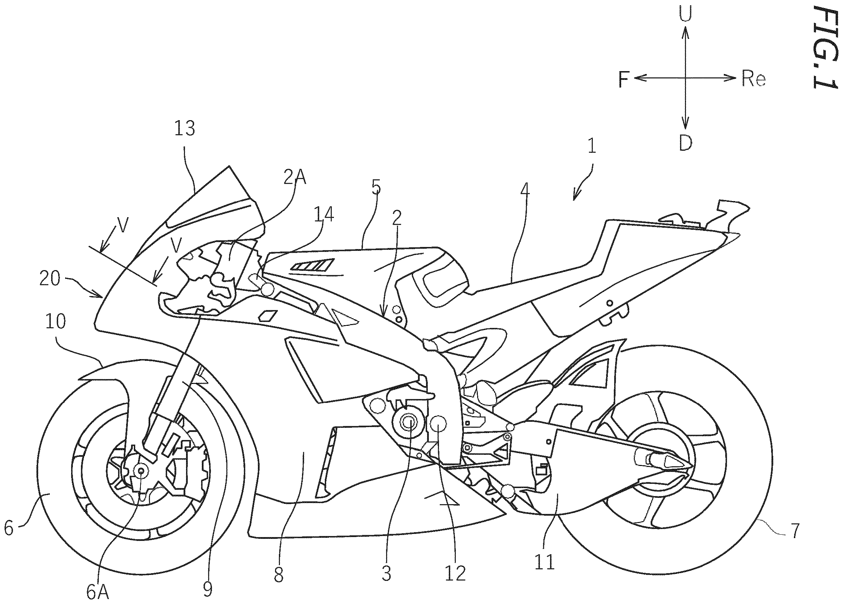

An embodiment of a straddled vehicle will now be described with reference to the drawings. FIG. **1** is a left side view of a motorcycle **1,** which is an embodiment of a straddled vehicle.

The motorcycle **1** includes a vehicle body frame **2** having a head pipe **2A,** an internal combustion engine (hereinafter referred to as "engine") **3** supported by the vehicle body frame **2,** a seat **4** supported by the vehicle body frame **2,** a fuel tank **5,** a front wheel **6,** a rear wheel **7,** a front cowl **20,** and side covers **8.**

The terms front, rear, left, right, up and down, as used in the description below, refer to these directions as seen from a virtual rider seated on the seat **4** while the motorcycle **1** is standing upright on a horizontal surface with no rider and no load thereon, unless specified otherwise. The designations F, Re, L, R, U and D, as used in the figures, refer to front, rear, left, right, up and down, respectively.

A steering shaft (not shown) is inserted in the head pipe **2A** so that the steering shaft can rotate left and right. A handlebar **14** is fixed to an upper portion of the steering shaft. A front fork **9** is fixed to a lower portion of the steering shaft. The lower end portion of the front fork **9** is connected to a center axle **6A** of the front wheel **6.** The motorcycle **1** includes a front fender **10.** At least a part of the front fender **10** is arranged upward of the front wheel **6.**

The front cowl **20** is arranged forward of the head pipe **2A.** The front cowl **20** is arranged upward of the front wheel **6,** and arranged upward of the front fender **10.** The detailed configuration of the front cowl **20** will be described below. The side covers **8** are arranged leftward and rightward of the front cowl **20,** respectively. The side covers **8** are connected to the front cowl **20.** In the present embodiment, the side covers **8** are separate from the front cowl **20,** but the side covers **8** may be integrally formed with the front cowl **20.** A windshield **13** is fixed to an upper portion of the front cowl **20.**

The fuel tank **5** is arranged rearward of the head pipe **2A.** The seat **4** is arranged rearward of the fuel tank **5.** The fuel tank **5** and the seat **4** are arranged upward of the engine **3.** The rear wheel **7** is connected to the engine **3** via a power transmission member such as a chain (not shown). The rear wheel **7** is the drive wheel driven by the engine **3.** The rear wheel **7** is connected to the rear end portion of a rear arm **11**. The front end portion of the rear arm **11** is pivotably connected to the vehicle body frame **2** by a pivot shaft **12.**

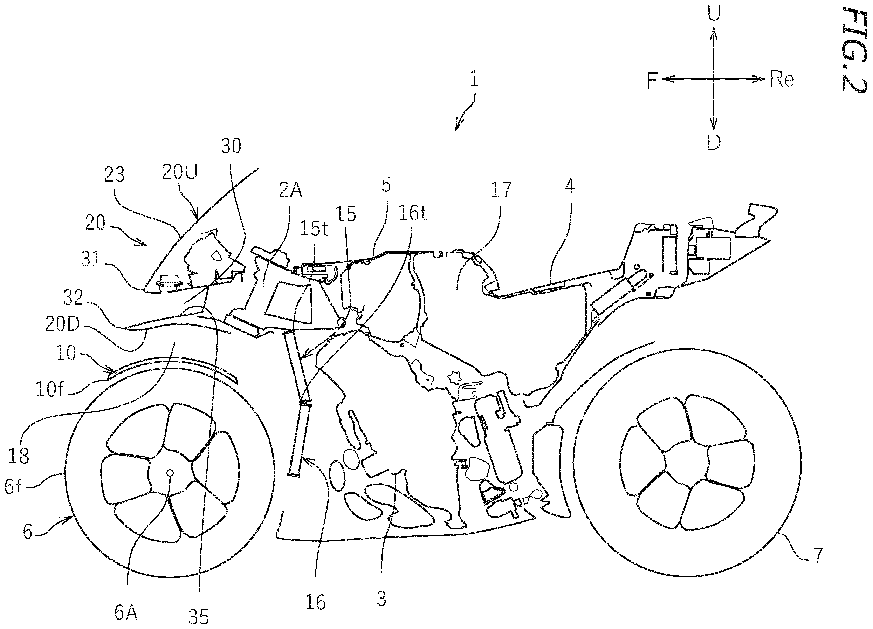

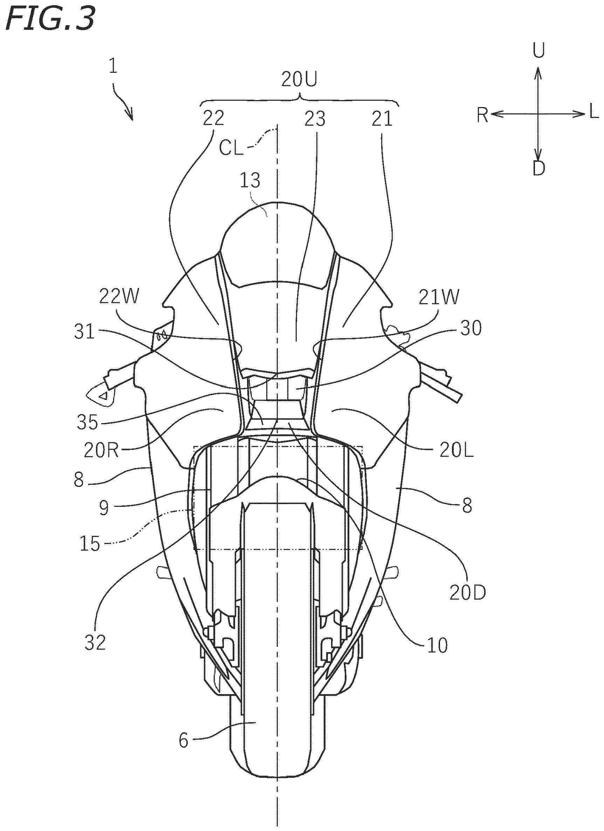

FIG. **2** is a vertical end surface view passing through the vehicle center line **CL** (see FIG. **3**) of the motorcycle **1**. In the present embodiment, the engine **3** is a water-cooled engine. The motorcycle **1** includes a radiator **15** and an oil cooler **16.** Note that the radiator **15** and the oil cooler **16** are an example of the heat exchanger. The radiator **15** and the oil cooler **16** are arranged rearward relative to the center axle **6A** of the front wheel **6.** An air passage **18** is formed downward of the front cowl **20** and upward of the front fender **10** through which the airflow generated by the driving of the motorcycle **1** (hereinafter simply referred to as "airflow") flows. The radiator **15** and the oil cooler **16** are arranged rearward of the air passage **18.**

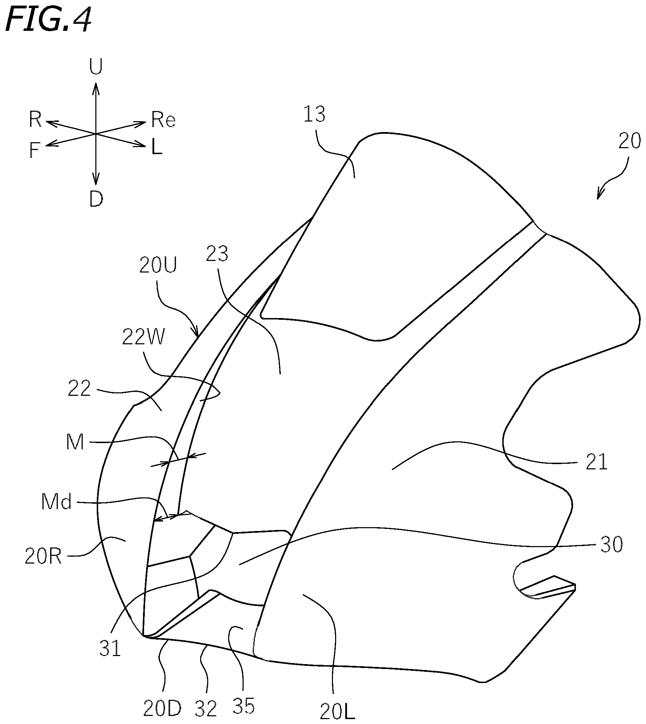

Next, a detailed configuration of the front cowl **20** will be described. FIG. **3** is a front view of the motorcycle **1.** FIG. **4** is a perspective view of the front cowl **20.** As shown in FIG. **3** and FIG. **4****,** the front cowl **20** includes a depression **30** recessed rearward. In the present embodiment, the depression **30** is not only open forward but is also open backward. The depression **30** forms a duct **35** that directs airflow from the front side of the front cowl **20** toward the rear side of the front cowl **20.** As shown in FIG. **2****,** the engine **3** and an air cleaner **17** are arranged rearward of the duct **35.**

The front cowl **20** includes a cowl upper portion **20U** located upward of the depression **30,** a cowl lower portion **20D** located downward of the depression **30,** a cowl left portion **20L** located leftward of the depression **30,** and a cowl right portion **20R** located rightward of the depression **30.** The cowl upper portion **20U** includes a left portion **21,** a right portion **22** located rightward of the left portion **21,** and a central portion **23** located rightward of the left portion **21** and leftward of the right portion **22.** As shown in FIG. **3****,** as the vehicle is viewed from front, the left portion **21** is located leftward relative to the vehicle center line **CL,** and the right portion **22** is located rightward relative to the vehicle center line **CL.** As the vehicle is viewed from front, the central portion **23** overlaps the vehicle center line **CL.** The width (dimension in the left-right direction) of the central portion **23** gradually decreases downward across the central portion **23.** The respective surfaces of the left portion **21,** the right portion **22** and the central portion **23** are smooth curved surfaces.

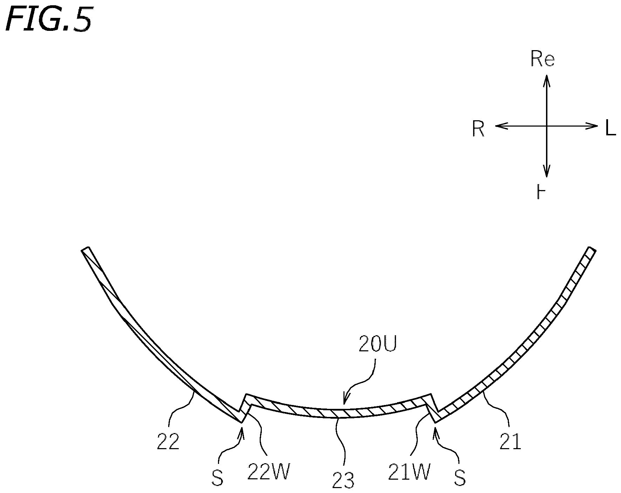

The central portion **23** is recessed rearward from the left portion **21** and the right portion **22.** The central portion **23** is a depressed portion that is recessed rearward. The left portion **21** has a right side surface **21W** located on the left side of the central portion **23.** The right side surface **21W** is a surface that intersects a straight line (not shown) extending in the vehicle left-right direction and extends forward and upward. The right portion **22** has a left side surface **22W** located on the right side of the central portion **23** (see FIG. **4**). The left side surface **22W** is a surface that intersects a straight line extending in the vehicle left-right direction and extends forward and upward. FIG. **5** is an end surface view taken along line V-V of FIG. **1****,** showing the front cowl **20.** As the front cowl **20** has the right side surface **21W** and the left side surface **22W,** steps **S** are formed between the left portion **21** and the central portion **23** and between the right portion **22** and the central portion **23.**

As shown in FIG. **4****,** the amount of depression **M** of the central portion **23** gradually increases downward across the central portion **23.** Note that the amount of depression **M,** as used herein, refers to the amount of depression in the vehicle front-rear direction of the central portion **23** relative to the left portion **21** and the right portion **22.** The amount of depression **Md** at the lower end of the central portion **23** is larger than the amount of depression **M** of a portion of the central portion **23** upward relative to the lower end. That is, the amount of depression **Md** of the lower end of the central portion **23** is larger than the amount of depression **M** of other portions of the central portion **23.**

As shown in FIG. **2****,** on the vertical end surface of the front cowl **20** passing through the vehicle center line **CL,** the central portion **23** of the cowl upper portion **20U** has a first front end **31** and the cowl lower portion **20D** has a second front end **32.** Note that while the central portion **23** of the cowl upper portion **20U** has only one front end in the present embodiment, if the central portion **23** of the cowl upper portion **20U** has multiple front ends, the first front end **31** refers to the most downwardly located front end. As shown in FIG. **2****,** the first front end **31** and the second front end **32** project forward. The first front end **31** and the second front end **32** are formed protruding toward the front side. The first front end **31** and the second front end **32** are located rearward relative to a front end **6f** of the front wheel **6.** The first front end **31** and the second front end **32** are located rearward relative to the front end **10f** of the front fender **10.** The first front end **31** and the second front end **32** are located rearward relative to the front end **6f** of the front wheel **6** and forward relative to the center axle **6A** of the front wheel **6.**

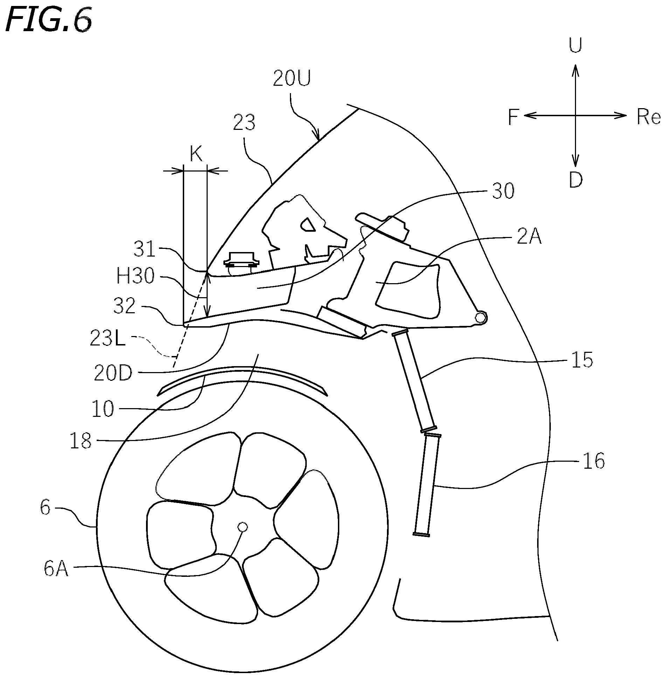

The second front end **32** is located forward relative to the first front end **31.** As shown in FIG. **6****,** the dimension **K** in the front-rear direction between the second front end **32** and the first front end **31** is relatively large on the vertical end surface of the front cowl **20** passing through the vehicle center line **CL.** In the present embodiment, the dimension **K** in the front-rear direction between the second front end **32** and the first front end **31** on the vertical end surface of the front cowl **20** passing through the vehicle center line **CL** is larger than the maximum value Md (see FIG. **4**) of the amount of depression of the central portion **23** of the cowl upper portion **20U.** The dimension **K** in the front-rear direction between the second front end **32** and the first front end **31** on the vertical end surface of the front cowl **20** passing through the vehicle center line **CL** is equal to or greater than a half of the dimension **H30** in the vertical direction of the depression **30** at the location of the first front end **31.** On the vertical end surface of the front cowl **20** passing through the vehicle center line **CL,** the second front end **32** is located forward of the extension line **23L,** which is a downward extension of the contour of the central portion **23** of the cowl upper portion **20U** (specifically, the contour of the surface of the central portion **23**). Note that the extension line **23L** is a tangent line passing through the lower end of the contour of the surface of the central portion **23.**

As shown in FIG. **2****,** the second front end **32** of the front cowl **20** is located upward relative to the upper end **15t** of the radiator **15.** The second front end **32** of the front cowl **20** is located upward of the upper end **16t** of the oil cooler **16.**

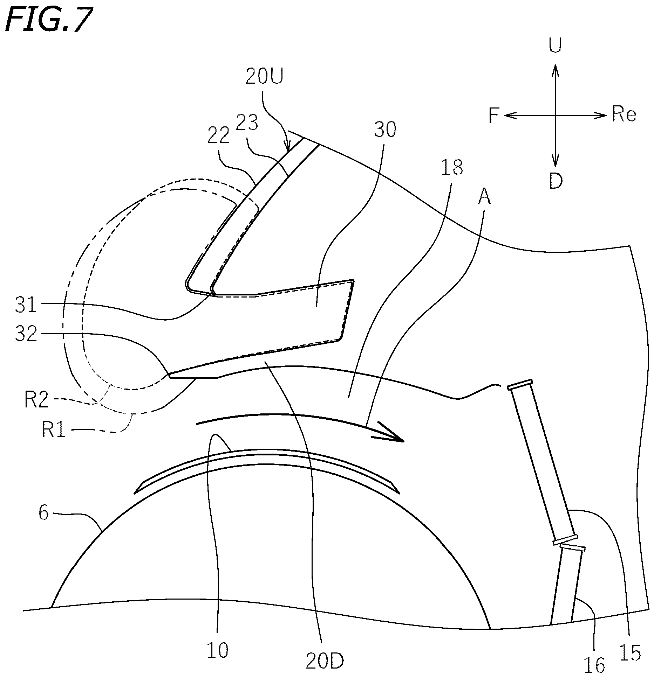

When driving the motorcycle **1,** an airflow is generated around the motorcycle **1** moving from the front side toward the rear side of the motorcycle **1.** The depression **30** of the front cowl **20** has openings facing forward and rearward, and the air cleaner **17** is arranged rearward of the depression **30.** The flow path rearward of the depression **30** is constricted. Since the airflow blows onto the front cowl **20** from the front side, the front side of the depression **30** of the front cowl **20** is an area of high pressure (i.e., the high pressure area) **R2,** as shown in FIG. **7****.** According to the present embodiment, the second front end **32** of the cowl lower portion **20D** is located forward of the first front end **31** of the cowl upper portion **20U.** Compared to the case where the second front end **32** is located rearward of the first front end **31,** the position of the high pressure area **R2** moves in the direction from the second front end **32** toward the first front end **31,** i.e., upward. Therefore, the high pressure area **R2** is formed upward of the high pressure area **R1** when the second front end **32** is located rearward relative to the first front end **31.** According to the present embodiment, the high pressure area **R2** forward of the depression **30** is formed at a position relatively upward. According to the present embodiment, the central portion **23** of the cowl upper portion **20U** of the front cowl **20** is recessed rearward from the left portion **21** and the right portion **22.** The recessed central portion **23** facilitates upward repositioning of the high pressure area **R2.**

When the high pressure area **R2** is formed at a position relatively upward, the airflow tends to flow downward of the front cowl **20.** The airflow tends to flow into the air passage **18** downward of the front cowl **20.** Air flowing into the air passage **18** is supplied to the radiator **15** and the oil cooler **16** after flowing through the air passage **18.** A sufficient amount of air flowing into the air passage **18** improves the cooling performance of the radiator **15** and the oil cooler **16.**

As described above, since the motorcycle **1** according to the present embodiment includes the front cowl **20,** it is possible to reduce the aerodynamic drag while driving. As the second front end **32** of the cowl lower portion **20D** is arranged forward of the first front end **31** of the cowl upper portion **20U,** the high pressure area **R2** formed forward of the depression **30** of the front cowl **20** is formed at a position relatively upward. Therefore, the airflow is relatively more likely to flow into the air passage **18** downward of the cowl lower portion **20D.** A sufficient amount of air can be smoothly supplied to the radiator **15** and the oil cooler **16.** Thus, with the motorcycle **1,** it is possible to reduce the aerodynamic drag during driving, and it is possible to improve the cooling performance of the radiator **15** and the oil cooler **16.**

With the motorcycle **1,** the central portion **23** of the cowl upper portion **20U** is recessed rearward, which facilitates the upward repositioning of the high pressure area **R2.** Thus, it is possible to further improve the cooling performance of the radiator **15** and the oil cooler **16.**

According to the present embodiment, steps **S** are formed on the left side and on the right side of the central portion **23** of the cowl upper portion **20U** (see FIG. **5**). The left portion **21** of the cowl upper portion **20U** includes the right side surface **21W** located on the left side of the central portion **23,** and the right portion **22** of the cowl upper portion **20U** includes the left side surface **22W** located on the right side of the central portion **23.** The amount of depression **M** of the central portion **23** of the cowl upper portion **20U** gradually increases downward across the central portion **23** (see FIG. **4**). The amount of depression **Md** at the lower end of the central portion **23** is larger than the amount of depression **M** of other portions of the central portion **23.** With such a configuration of the front cowl **20,** it is easier to form the high pressure area **R2** at a position relatively upward. Thus, it is possible to improve the cooling performance of the radiator **15** and the oil cooler **16.**

According to the present embodiment, as shown in FIG. **6****,** on the vertical end surface of the front cowl **20** passing through the vehicle center line **CL,** the second front end **32** of the cowl lower portion **20D** is located forward of the extension line **23L,** which is a downward extension of the contour of the central portion **23** of the cowl upper portion **20U.** The dimension **K** in the front-rear direction between the second front end **32** and the first front end **31** on the vertical end surface of the front cowl **20** passing through the vehicle center line **CL** is larger than the maximum value of the amount of depression **Md** of the central portion **23** of the cowl upper portion **20U** (see FIG. **4**). On the vertical end surface of the front cowl **20** passing through the vehicle center line **CL,** the dimension **K** in the front-rear direction between the second front end **32** and the first front end **31** is equal to or greater than a half of the dimension **H30** in the vertical direction of the depression **30** at the location of the first front end **31.** Thus, the second front end **32** of the cowl lower portion **20D** is located more forward. According to this present embodiment, it is easier to form the high pressure area **R2** at a position more upward. Thus, air can flow more smoothly toward the radiator **15** and the oil cooler **16,** which further improves the cooling performance of the radiator **15** and the oil cooler **16.**

According to the present embodiment, the second front end **32** of the cowl lower portion **20D** is located upward relative to the upper end **15t** of the radiator **15** and the upper end **16t** of the oil cooler **16.** Through the air passage **18** downward of the cowl lower portion **20D,** air can flow more smoothly toward the radiator **15** and the oil cooler **16.** Thus, it is possible to further improve the cooling performance of the radiator **15** and the oil cooler **16.**

According to the present embodiment, the depression **30** of the front cowl **20** has an opening facing rearward. The depression **30** forms a duct **35** in the front cowl **20** that directs the airflow rearward. Through the duct **35,** air can be directed from the front side of the front cowl **20** to the rear side of the front cowl **20.** As shown in FIG. **2****,** with the motorcycle **1** according to the present embodiment, the engine **3** and the air cleaner **17** are arranged rearward of the duct **35.** Through the duct **35,** air can be efficiently supplied to the air cleaner **17** and the engine **3.** Thus, it is possible to improve the power of the engine **3.**

While an embodiment of the straddled vehicle has been described above, this embodiment is merely an example. Various other embodiments are possible.

While the motorcycle **1** according to the embodiment includes the radiator **15** and the oil cooler **16,** one of the radiator **15** and the oil cooler **16** may be absent. If the engine **3** is not water-cooled, both the radiator **15** and the oil cooler **16** may be omitted. A heat exchanger as used herein refers to a device that is cooled by heat exchange with air. A heat exchanger is not limited to the radiator **15** or the oil cooler **16.**

While the central portion **23** of the cowl upper portion **20U** is recessed rearward from the left portion **21** and the right portion **22** in the embodiment described above, the central portion **23** does not need to be recessed rearward from the left portion **21** and the right portion **22.**

There is no particular limitation on the shape of depression of the central portion **23** of the cowl upper portion **20U.** The portion of the central portion **23** with the largest amount of depression **M** is not limited to the lower end of the central portion **23.** The amount of depression **M** of the central portion **23** does not need to gradually increase downward across the central portion **23.** For example, the amount of depression **M** of the central portion **23** may be constant regardless of the vertical position across the central portion **23.** There may be no step **S** on the left side or the right side of the central portion **23** of the cowl upper portion **20U.** The left portion **21** does not need to have the right side surface **21W** and the right portion **22** does not need to have the left side surface **22W.**

There is no particular limitation on the amount of projection forward of the second front end **32** of the cowl lower portion **20D.** On the vertical end surface of the front cowl **20** passing through the vehicle center line **CL,** the second front end **32** does not need to be located forward relative to the extension line **23L,** which is a downward extension of the contour of the central portion **23** of the cowl upper portion **20U.** On the vertical end surface, the dimension **K** in the front-rear direction between the second front end **32** and the first front end **31** may be less than a half of the dimension **H30** in the vertical direction of the depression **30** at the location of the first front end **31.** The dimension **K** in the front-rear direction between the second front end **32** and the first front end **31** on the vertical end surface may be less than or equal to the maximum value **Md** of the amount of depression **M** of the central portion **23** of the cowl upper portion **20U.**

The second front end **32** of the cowl lower portion **20D** may be located at a height equal to or below the upper end **15t** of the radiator **15.**

The rear side of the depression **30** needs to eventually be squeezed or closed in order for a high pressure area to be formed forward of the depression **30** of the front cowl **20,** but there is no particular limitation on the form of the depression **30** itself. The depression **30** of the front cowl **20** may have an opening facing rearward or may not be open. The duct **35** does not need to be formed in the front cowl **20.** The depression **30** of the front cowl **20** may accommodate a headlight or the like.

A straddled vehicle refers to a vehicle that is straddled by a rider. The straddled vehicle is not limited to the motorcycle **1.** The straddled vehicle may be an auto tricycle, an ATV (All Terrain Vehicle), or a snowmobile, for example.

The terms and expressions used herein are used for explanation purposes and should not be construed as being restrictive. It should be appreciated that the terms and expressions used herein do not eliminate any equivalents of features illustrated and mentioned herein, but include various modifications falling within the claimed scope of the present invention. The present invention may be embodied in many different forms. The present disclosure is to be considered as providing examples of the principles of the invention. These examples are described herein with the understanding that such examples are not intended to limit the present invention to preferred embodiments described herein and/or illustrated herein. Hence, the present invention is not limited to the preferred embodiments described herein. The limitations in the claims are to be interpreted broadly based on the language included in the claims and not limited to examples described in the present specification or during the prosecution of the application.

### Reference Signs List

1: Motorcycle (straddled vehicle), 6: Front wheel, 6A: Center axle, 15: Radiator (heat exchanger), 18: Air passage, 20: Front cowl, 20U: Cowl upper portion, 20D: Cowl lower portion, 20L: Cowl left portion, 20R: Cowl right portion, 21: Left portion, 21W: Right side surface, 22: Right portion, 22W: Left side surface, 23: Central portion, 23L: Extension line, 30: Depression, 31: First front end, 32: Second front end, 35: Duct

## Claims

1. A straddled vehicle (**1**), comprising:
a front wheel (**6**) having a center axle (**6A**);
a front cowl (**20**) that is arranged upward of the front wheel (**6**) and has a depression (**30**) recessed rearward; and
a heat exchanger (**15**) arranged rearward relative to the center axle (**6A**) of the front wheel (**6**), wherein:
the front cowl (**20**) includes a cowl upper portion (**20U**) located upward of the depression (**30**), a cowl lower portion (**20D**) located downward of the depression (**30**), a cowl left portion (**20L**) located leftward of the depression (**30**), and a cowl right portion (**20R**) located rightward of the depression (**20**);
an air passage (**18**) is formed downward of the cowl lower portion (**20D**) and upward of the front wheel (**6**), wherein an airflow (**A**) flows rearward through the air passage (**18**);
the heat exchanger (**15**) is arranged rearward of the air passage (**18**); and
on a vertical end surface passing through a vehicle center line (**CL**) of the front cowl (**20**), the cowl upper portion (**20U**) has a first front end (**31**) projecting forward, and cowl lower portion (**20D**) has a second front end (**32**) located forward relative to the first front end (**31**);
**characterized in that**
the cowl upper portion (**20U**) includes a left portion (**21**), a right portion (**22**) located rightward relative to the left portion (**21**), and a central portion (**23**) that is located rightward of the left portion (**21**) and leftward of the right portion (**22**) and that is recessed rearward from the left portion (**21**) and the right portion (**22**); and
the first front end (**31**) is provided in the central portion (**23**).

2. The straddled vehicle (**1**) according to claim 1, wherein an amount of depression (**Md**) at a lower end of the central portion (**23**) of the cowl upper portion (**20U**) is larger than an amount of depression (**M**) of a portion of the central portion (**23**) upward relative to the lower end.

3. The straddled vehicle (**1**) according to claim 1 or 2, wherein an amount of depression (**M**) of the central portion (**23**) of the cowl upper portion (**20U**) gradually increases downward across the central portion (**23**).

4. The straddled vehicle (**1**) according to any one of the foregoing claims, wherein:
the left portion (**21**) of the cowl upper portion (**20U**) has a right side surface (**21W**) located on a left side of the central portion (**23**); and
the right portion (**22**) of the cowl upper portion (**20U**) has a left side surface (**22W**) located on a right side of the central portion (**23**).

5. The straddled vehicle (**1**) according to any one of the foregoing claims, wherein on a vertical end surface passing through a vehicle center line (**CL**) of the front cowl (**20**), the second front end (**32**) is located forward of an extension line (**23L**), which is a downward extension of a contour of the central portion (**23**) of the cowl upper portion (**20U**).

6. The straddled vehicle (**1**) according to any one of the foregoing claims, wherein on a vertical end surface passing through a vehicle center line (**CL**) of the front cowl (**20**), a dimension (**K**) in a front-rear direction between the second front end (**32**) and the first front end (**31**) is equal to or greater than a half of a dimension (**H30**) of the depression (**30**) in the vertical direction at a position of the first front end (**31**).

7. The straddled vehicle (**1**) according to any one of the foregoing claims, wherein on a vertical end surface passing through a vehicle center line (**CL**) of the front cowl (**20**), a dimension (**K**) in a front-rear direction between the second front end (**32**) and the first front end (**31**) is larger than a maximum value of an amount of depression (**M**) of the central portion (**23**) of the cowl upper portion (**20U**).

8. The straddled vehicle (**1**) according to any one of the foregoing claims, wherein the second front end (**32**) of the cowl lower portion (**20D**) is located upward relative to an upper end (**15t**) of the heat exchanger (**15**).

9. The straddled vehicle (**1**) according to any one of the foregoing claims, wherein the first front end (**31**) and the second front end (**32**) are located rearward relative to a front end (**6f**) of the front wheel (**6**) and forward relative to the center axle (**6A**) of the front wheel (**6**).

10. The straddled vehicle (**1**) according to any one of the foregoing claims, wherein:
the depression (**30**) of the front cowl (**20**) has an opening facing rearward; and
the front cowl (**20**) has a duct (**35**) formed by the depression that directs airflow rearward.

## Patentansprüche

1. Aufsitzfahrzeug (1), umfassend:
ein Vorderrad (6) mit einer Mittelachse (6A);
eine vordere Verkleidung (20), die oberhalb des Vorderrads (6) angeordnet ist und eine nach hinten versetzte Vertiefung (30) aufweist, und
einen Wärmetauscher (15), angeordnet nach hinten relativ zur Mittelachse (6A) des Vorderrades (6), wobei:
die vordere Verkleidung (20) einen oberen Verkleidungsabschnitt (20U), angeordnet oberhalb der Vertiefung (30), einen unteren Verkleidungsabschnitt (20D), angeordnet unterhalb der Vertiefung (30), einen linken Verkleidungsabschnitt (20L), angeordnet links von der Vertiefung (30), und einen rechten Verkleidungsabschnitt (20R), angeordnet rechts von der Vertiefung (20), umfasst;
ein Luftkanal (18) unterhalb des unteren Verkleidungsabschnitts (20D) und oberhalb des Vorderrads (6) gebildet ist, wobei ein Luftstrom (A) durch den Luftkanal (18) nach hinten strömt;
der Wärmetauscher (15) hinter dem Luftkanal (18) angeordnet ist; und
auf einer vertikalen Endfläche, die durch eine Fahrzeugmittellinie (CL) der vorderen Verkleidung (20) verläuft, der obere Verkleidungsabschnitt (20U) ein erstes vorderes Ende (31) aufweist, das nach vorne vorsteht, und der untere Verkleidungsabschnitt (20D) ein zweites vorderes Ende (32) aufweist, das nach vorne relativ zum ersten vorderen Ende (31) angeordnet ist;
**dadurch gekennzeichnet, dass**
das obere Verkleidungsabschnitt (20U) einen linken Abschnitt (21), einen rechten Abschnitt (22), angeordnet rechts relativ zum linken Abschnitt (21), und einen mittleren Abschnitt (23), der rechts vom linken Abschnitt (21) und links vom rechten Abschnitt (22) angeordnet ist und der vom linken Abschnitt (21) und vom rechten Abschnitt (22) nach hinten versetzt ist, umfasst; und
das erste vordere Ende (31) im mittleren Abschnitt (23) angeordnet ist.

2. Aufsitzfahrzeug (1) nach Anspruch 1, wobei eine Menge der Vertiefung (Md) an einem unteren Ende des mittleren Abschnitts (23) des oberen Verkleidungsabschnitts (20U) größer ist als eine Menge der Vertiefung (M) eines Abschnitts des mittleren Abschnitts (23) nach oben relativ zum unteren Ende.

3. Aufsitzfahrzeug (1) nach Anspruch 1 oder 2, wobei eine Menge der Vertiefung (M) des mittleren Abschnitts (23) des oberen Verkleidungsabschnitts (20U) über den mittleren Abschnitt (23) hinweg schrittweise nach unten zunimmt.

4. Aufsitzfahrzeug (1) nach einem der vorhergehenden Ansprüche, wobei:
der linke Abschnitt (21) des oberen Verkleidungsabschnitts (20U) eine rechte Seitenfläche (21W), angeordnet auf einer linken Seite des mittleren Abschnitts (23), aufweist, und
der rechte Teil (22) des oberen Verkleidungsabschnitts (20U) eine linke Seitenfläche (22W), angeordnet auf einer rechten Seite des mittleren Abschnitts (23), aufweist.

5. Aufsitzfahrzeug (1) nach einem der vorhergehenden Ansprüche, wobei auf einer vertikalen Endfläche, verlaufend durch eine Fahrzeugmittellinie (CL) der vorderen Verkleidung (20), das zweite vordere Ende (32) vor einer Verlängerungslinie (23L) angeordnet ist, die eine nach unten gerichtete Verlängerung einer Kontur des mittleren Abschnitts (23) des oberen Verkleidungsabschnitts (20U) ist.

6. Aufsitzfahrzeug (1) nach einem der vorhergehenden Ansprüche, wobei auf einer vertikalen Endfläche, verlaufend durch eine Fahrzeugmittellinie (CL) der vorderen Verkleidung (20), ein Maß (K) in einer Richtung von vorne nach hinten zwischen dem zweiten vorderen Ende (32) und dem ersten vorderen Ende (31) größer gleich einer Hälfte eines Maßes (H30) der Vertiefung (30) in der vertikalen Richtung an einer Position des ersten vorderen Endes (31) ist.

7. Aufsitzfahrzeug (1) nach einem der vorhergehenden Ansprüche, wobei auf einer vertikalen Endfläche, verlaufend durch eine Fahrzeugmittellinie (CL) der vorderen Verkleidung (20), ein Maß (K) in einer Richtung von vorne nach hinten zwischen dem zweiten vorderen Ende (32) und dem ersten vorderen Ende (31) größer ist als ein Maximalwert einer Menge der Vertiefung (M) des mittleren Abschnitts (23) des oberen Verkleidungsabschnitts (20U).

8. Aufsitzfahrzeug (1) nach einem der vorhergehenden Ansprüche, wobei das zweite vordere Ende (32) des unteren Verkleidungsabschnitts (20D) nach oben relativ zu einem oberen Ende (15t) des Wärmetauschers (15) angeordnet ist.

9. Aufsitzfahrzeug (1) nach einem der vorhergehenden Ansprüche, wobei das erste vordere Ende (31) und das zweite vordere Ende (32) hinten relativ zu einem vorderen Ende (6f) des Vorderrads (6) und vorne relativ zur Mittelachse (6A) des Vorderrads (6) angeordnet sind.

10. Aufsitzfahrzeug (1) nach einem der vorhergehenden Ansprüche, wobei:
die Vertiefung (30) der vorderen Verkleidung (20) eine nach hinten zeigende Öffnung aufweist; und
die vordere Verkleidung (20) einen Kanal (35), gebildet durch die Vertiefung, aufweist, der den Luftstrom nach hinten leitet.

## Revendications

1. Véhicule à selle (1) comprenant :
une roue avant (6) possédant un essieu central (6A),
un carénage avant (20) qui est disposé en haut de la roue avant (6) et comporte un enfoncement (30) vers l'arrière, et
un échangeur de chaleur (15) disposé à l'arrière par rapport à l'essieu central (6A) de la roue avant (6), dans lequel :
le carénage avant (20) inclut une partie supérieure de carénage (20U) située en haut de l'enfoncement (30), une partie inférieure de carénage (20D) située en bas de l'enfoncement (30), une partie gauche de carénage (20L) située à gauche de l'enfoncement (30) et une partie droite de carénage (20R) située à droite de l'enfoncement (30),
un passage d'air (18) est formé en bas de la partie inférieure de carénage (20D) et en haut de la roue avant (6), un flux d'air (A) circulant vers l'arrière au travers du passage d'air (18),
l'échangeur de chaleur (15) est disposé à l'arrière du passage d'air (18), et
sur une surface terminale verticale traversant l'axe central du véhicule (CL) du carénage avant (20), la partie supérieure de carénage (20U) présente une première extrémité avant (31) dépassant vers l'avant et la partie inférieure de carénage (20D) présente une seconde extrémité avant (32) située en avant par rapport à la première extrémité avant (31),
**caractérisé en ce que** :
la partie supérieure de carénage (20U) inclut une partie gauche (21), une partie droite (22) située à la droite de la partie gauche (21) et une partie centrale (23) qui est située à la droite de la partie gauche (21) et à la gauche de la partie droite (22) et qui est en creux vers l'arrière à partir de la partie gauche (21) et de la partie droite (22), et
la première extrémité avant (31) est placée dans la partie centrale (23).

2. Véhicule à selle (1) selon la revendication 1, dans lequel la valeur de dépression (Md) à l'extrémité inférieure de la partie centrale (23) de la partie supérieure de carénage (20U) est plus grande que la valeur de dépression (M) d'une fraction de la partie centrale (23) vers le haut par rapport à l'extrémité inférieure

3. Véhicule à selle (1) selon la revendication 1 ou la revendication 2, dans lequel la valeur de dépression (M) de la partie centrale (23) de la partie supérieure de carénage (20U) augmente progressivement vers le bas à travers la partie centrale (23).

4. Véhicule à selle (1) selon l'une quelconque des revendications précédentes, dans lequel :
la partie gauche (21) de la partie supérieure de carénage (20U) comporte une surface latérale droite (21W) située sur le côté gauche de la partie centrale (23), et
la partie droite (22) de la partie supérieure de carénage (20U) comporte une surface latérale gauche (22W) située sur le côté gauche de la partie centrale (23).

5. Véhicule à selle (1) selon l'une quelconque des revendications précédentes, dans lequel, sur une surface terminale verticale traversant l'axe central du véhicule (CL) du carénage avant (20), la seconde extrémité avant (32) est située en avant d'une ligne d'extension (23L) qui représente une extension vers le bas d'un contour de la partie centrale (23) de la partie supérieure de carénage (20U).

6. Véhicule à selle (1) selon l'une quelconque des revendications précédentes, dans lequel, sur une surface terminale verticale traversant l'axe central du véhicule (CL) du carénage avant (20), la dimension (K) dans la direction avant arrière entre la seconde extrémité avant (32) et la première extrémité avant (31) est supérieure ou égale à la moitié de la dimension (H30) de l'enfoncement (30) dans la direction verticale au niveau de la position de la première extrémité avant (31).

7. Véhicule à selle (1) selon l'une quelconque des revendications précédentes, dans lequel, sur une surface terminale verticale traversant l'axe central du véhicule (CL) du carénage avant (20), la dimension (K) dans la direction avant arrière entre la seconde extrémité avant (32) et la première extrémité avant (31) est plus grande que la valeur maximale de la valeur de dépression (M) de la partie centrale (23) de la partie supérieure de carénage (20U).

8. Véhicule à selle (1) selon l'une quelconque des revendications précédentes, dans lequel la seconde extrémité avant (32) de la partie inférieure de carénage (20D) est située vers le haut par rapport à l'extrémité supérieure (15t) de l'échangeur de chaleur (15).

9. Véhicule à selle (1) selon l'une quelconque des revendications précédentes, dans lequel la première extrémité avant (31) et la seconde extrémité avant (32) sont situées vers l'arrière par rapport à l'extrémité avant (6f) de la roue avant (6) et à l'avant par rapport à l'essieu central (6A) de la roue avant (6).

10. Véhicule à selle (1) selon l'une quelconque des revendications précédentes, dans lequel :
l'enfoncement (30) du carénage avant (20) comporte une ouverture faisant face vers le bas, et
le carénage avant (20) comporte un conduit (35) formé par l'enfoncement qui dirige le flux d'air vers l'arrière.
